(19) Europäisches Patentamt
European Patent Office
Office européen des brevets

(11) **EP 3 623 394 B1**

(12) **EUROPEAN PATENT SPECIFICATION**

(45) Date of publication and mention of the grant of the patent:
**24.07.2024 Bulletin 2024/30**

(21) Application number: **19193802.6**

(22) Date of filing: **09.06.2015**

(51) International Patent Classification (IPC):
***C08F 4/62** (2006.01)* ***C08F 30/08** (2006.01)*
***C08F 38/00** (2006.01)* ***C08F 4/78** (2006.01)*
***C08G 61/08** (2006.01)*

(52) Cooperative Patent Classification (CPC):
**C08F 4/78; C08F 4/62082; C08F 4/62141; C08F 30/08; C08F 38/00;** C08G 61/08; C08G 2261/418

(54) **METALLACYCLOALKYLENE COMPLEXES AND USE FOR ALKYNE POLYMERIZATION TO CYCLIC POLYACETYLENES**

METALLACYCLOALKYLENKOMPLEXE UND VERWENDUNG ZUR ALKYLENPOLYMERISIERUNG ZU CYCLISCHEN POLYACETYLENEN

COMPLEXES DE MÉTALLACYCLOALKYLÈNE ET UTILISATION POUR LA POLYMÉRISATION D'ALKYNES EN POLYACÉTYLÈNES CYCLIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2014 US 201414299449**

(43) Date of publication of application:
**18.03.2020 Bulletin 2020/12**

(62) Document number(s) of the earlier application(s) in accordance with Art. 76 EPC:
**15806814.8 / 3 152 241**

(73) Proprietor: **University of Florida Research Foundation, Inc.**
**Gainesville, FL 32611 (US)**

(72) Inventors:
- **VEIGE, Adam Steven**
  **Gainesville, FL 32607 (US)**
- **SARKAR, Soumya**
  **Banglore Karnataka 560066 (IN)**
- **MCGOWAN, Kevin Patrick**
  **Pepper Pike, OH 44124 (US)**
- **KUPPUSWAMY, Subramaniam**
  **Mont Belvieu, Texas 77523 (US)**
- **ROLAND, Christopher D.**
  **Danville, CA 9452 (US)**

(74) Representative: **Engelhard, Markus**
**Boehmert & Boehmert Anwaltspartnerschaft mbB**
**Pettenkoferstrasse 22**
**80336 München (DE)**

(56) References cited:
**WO-A1-2013/085707** **US-A1- 2004 260 130**

- **KEVIN P. MCGOWAN ET AL: "Compelling mechanistic data and identification of the active species in tungsten-catalyzed alkyne polymerizations: conversion of a trianionic pincer into a new tetraanionic pincer-type ligand", CHEMICAL SCIENCE, vol. 4, no. 3, 1 January 2013 (2013-01-01), United Kingdom, pages 1145, XP055441337, ISSN: 2041-6520, DOI: 10.1039/c2sc21750c**
- **CHRISTOPHER D. ROLAND ET AL: "Cyclic polymers from alkynes", NATURE CHEMISTRY, vol. 8, no. 8, 16 May 2016 (2016-05-16), GB, pages 791 - 796, XP055441318, ISSN: 1755-4330, DOI: 10.1038/nchem.2516**
- **MATTHEW E. O'REILLY ET AL: "Unusually stable tungstenacyclobutadienes featuring an ONO trianionic pincer-type ligand", DALTON TRANSACTIONS, vol. 42, no. 10, 18 December 2012 (2012-12-18), GB, pages 3326, XP055479248, ISSN: 1477-9226, DOI: 10.1039/c2dt32653a**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• BAKER P K ET AL: "3,3-Dimethyl-1-butyne complexes of tungsten(II). Crystal structures of [WI2(CO)(NCPh)(eta^2-HC2Bu^t)2] and [WI2(CO){P(OR)3}2(eta^2-HC2Bu^t)] (R=Me and Et)", JOURNAL OF ORGANOMETALLIC CHEMIS, ELSEVIER-SEQUOIA S.A. LAUSANNE, CH, vol. 658, no. 1-2, 16 September 2002 (2002-09-16), pages 77 - 87, XP004381097, ISSN: 0022-328X, DOI: 10.1016/S0022-328X(02)01630-3

## Description

BACKGROUND OF INVENTION

High oxidation state alkylidene and alkylidyne metal complexes have been known for about 40 years. Alkene and alkyne metathesis via these metal complexes has been studied extensively. Alkylidyne metal complexes have been studied to a lesser extent than their alkylidene analogues, but they are of particular interest for their potential to promote nitrile-alkyne cross metathesis (NACM), which constitutes a potentially valuable tool to prepare novel alkynes from readily accessible nitriles.

Metal-alkylidynes contain a metal-carbon triple bond. Metal-alkylidynes, having a metal in its highest oxidation state, are known as Schrock-type metal-alkylidynes, and have been widely investigated. In high-oxidation state metal-alkylidynes, the alkylidyne carbon is a 6-electron donor that provides $\pi$-donation to the metal center. In spite of extensive $\pi$-donation, most high-oxidation state metal-alkylidynes are electron deficient and must be stabilized by additional ligands.

Schrock-type metal-alkylidynes are generally formed by the deprotonation of an $\alpha$-CH, where a base deprotonates the $\alpha$-carbon to form an alkylidyne from the alkylidene, or by an $\alpha$-elimination reaction, in which bulky alkyl groups promote deprotonation of the $\alpha$-CH to release steric crowding during formation of metal-alkylidynes. In rare cases, these complexes have been formed by a metathesis reaction between an alkyne and a metal-metal triple bond, or by a reductive recycle series of reactions, where a *gem*-dichloride reacts with a metal complex, to form a mixture of a metal chloride complex and a metal alkylidene, followed by reduction of the metal chloride complex back to the original metal complex.

A catalytic NACM was reported by Geyer et al., J. Am. Chem. Soc. 2007, 129, 3800-1, where a tungsten-nitride of the form $(RO)_3W{\equiv}N$ was found to reversibly convert to the corresponding metal-alkylidyne upon treatment with an alkyne. Unfortunately, rates of reaction were very slow and a very limited substrate scope was observed. Using a novel titanium alkylidene-alkyl complex $(PNP)Ti{=}CH^tBu(CH_2{}^tBu)$, where PNP is a phosphorous-nitrogen-phosphorous tridentate pincer-type ligand, and bulky nitriles, NACM was achieved. However, the catalyst required an external electrophile to liberate the alkyne, as reported by Bailey et al., J. Am. Chem. Soc. 2007, 129, 2234-5.

Polyacetylenes are organic polymers that can display electrical conductivity, paramagnetic susceptibility, optical nonlinearity, photoconductivity, gas permeability, liquid-crystallinity, and chain-helicity. Polymerization of acetylenes employs a transition metal catalyst, generally with a cocatalyst. High molecular weight polyacetylenes ($>10^6$ g/mol) have been produced from catalysts, such as $M(CO)_e$-$CCl_4$-h$\nu$ (M = Mo, W), where the active species has been determined to be a metal-alkylidene, with polymerization involving a metathesis pathway. The metal-alkylidyne, $(R_3CO)_3W{\equiv}CC(CH_3)_3$, has been shown to promote alkyne metathesis and alkyne polymerization, as reported by Mortreux et al., J. Mol. Catal. A: Chem. 1995, 96, 95-105, where the product composition varied with the substitution. Polymerization was shown to be the exclusive path only with phenyl or trimethylsilyl monosubstituted acetylenes. The metal-alkylidyne, $H_5C_6C{=}W(CO)_4Br$, promotes a slow alkyne polymerization without alkyne metathesis as reported by Katz et al., J. Am. Chem. Soc. 1984, 106, 2659-68, but only low monomer conversion is observed after periods of days.

One might expect that OCO pincer ligand supported metal-alkylidynes should be well suited as metathesis or polymerization catalysts for alkynes, as: the trianionic nature of the OCO pincer ligand allows access to a +6 oxidation state required for a metal-alkylidyne; the rigid planarity of the OCO pincer ligand imposes geometric restraints around the metal center, which might permit an increase in reactivity; and the strong M-C bond should distort the metal-alkylidyne out of the plane of the ligand, which might further increase the reactivity of the resulting complex.

The polymerization of monomers into cyclic polymers that do not contain end groups provides polymers that demonstrate unique physical properties. For example, the density, refractive index, $T_g$, viscoelasticity, solution dynamics, and surface properties of cyclic polymers all differ from those of their more common linear analogs. Despite research in this area for over half a century there still remains a lack of knowledge regarding the properties and fundamental behavior of cyclic analogs of important commercial polymers. Ring closing of large chains is one method of creating cyclic polymers, but requires infinite dilution conditions to be efficient, thus precluding large scale synthesis. Intermolecular cross coupling of two separate chains inevitably leads to linear impurities, where even trace noncyclic impurities can have pronounced effects on the physical properties of a sample. Exhaustive purification to remove linear byproducts, biphasic conditions, or preparatory scale GPC is often necessary and limits the large scale synthesis of cyclic polymers.

Ring-expansion polymerization is another method for accessing cyclic polymers. The mechanism involves the insertion of monomer into a growing ring at a labile bond, such as a metal-carbon or metal-oxygen bond. Ring expansion method does not suffer the same stringent concentration limitations as ring closure, making it an appealing approach for synthesizing cyclic polymers. A dibutyltin catalyst disclosed in Kricheldorf Macromolecules 1995, 28, 6718-6725, was an early example of this type of polymerization with lactones. In many cases, catalysts must be tuned to specific monomers. Ring-expansion olefin metathesis polymerization (REMP), introduced by Grubbs, and described in Bielawski et al., Science 2002, 297, 2041-2044, and Xia, Y. et al., J. Am. Chem. Soc. 2009, 131, 2670-2677 addresses producing cyclic polymers efficiently. While the ring-expansion method of creating cyclic polymers is much preferred to the post-polymerization processing required in ring-closure for larger scale syntheses, ring-expansion can suffer from backbiting

as the degree of polymerization increases and linear polymers can form during the reaction if trace linear alkenes are present in the monomer feedstock.

Additionally, REMP catalyst systems require a cyclic monomer, for example cyclooctene and its derivatives. It would be beneficial to employ more readily available and cheaper substrates. Thus, a longstanding general challenge in polymer chemistry is to synthesize cyclic polymers efficiently, with diverse compositions, high purity, high molecular weights, and from readily available and inexpensive monomers.

BRIEF SUMMARY

The present invention is directed to a catalyst and a polymerizable mixture comprising the catalyst. The invention as claimed is specified in the appended claims.

An embodiment of the present disclosure is directed to a method for preparation of tetra-anionic pincer-ligand supported metallacycloalkylene complexes from the trianionic pincer ligand supported metal-alkylidyne complexes, according to an embodiment of the present disclosure.

Another embodiment of the present disclosure is directed to the use of the tridentate pincer ligand metal complexes as initiators for the polymerization of alkynes. High molecular weight polymers are formed at high rates using the tridentate pincer ligand metal complexes. In an embodiment of the present disclosure the poly(alkyne) is a macrocyclic poly(alkyne).

Another embodiment of the present disclosure is directed to hydrogenation of the polyunsaturated cyclic poly(alkyne) to a saturated polymer. A macrocyclic poly(phenylacetylene) can be hydrogenated to cyclic poly(styrene).

BRIEF DESCRIPTION OF DRAWINGS

FIG. 1 shows the synthesis of tetraanionic pincer ligand supported metallacycloalkylene complexes **2, 3,** and **4,** from trianionic pincer ligand supported metal-alkylidyne complex **1,** according to an embodiment of the present disclosure.

FIG 2 shows the X-ray determined molecular structure of 4 with ellipsoids drawn at the 50% probability level and disordered THF atoms and lattice solvent molecule (pentane) removed for clarity with selected bond distances [Å]: W1-O1 1.990(1), W1-O2 1.984(1), W1-O3 2.328(1), W1-C27 2.045(2), W1-C32 2.014(2), W1-C33 1.902(2). Bond Angles [°]: O1-W1-O2 152.37(6), C32-W1-C27 37.47(8).

FIG. 3 gives $^{1}H$, and $^{13}C$ NMR signals for **4.**

FIG. 4 shows slots of TON determined by quantitative yield of poly(phenylacetylene) vs. time (min) for **2, 3,** and **4,** where averages of data in triplicate are plotted. Shows dynamic light scattering plots of a) cyclic polyphenylacetylene prepared according to an embodiment of the present disclosure, and b) linear polyphenylacetylene of the same molecular weight.

FIG. 5A shows GPC traces for cyclic poly(phenylacetylene) according to an embodiment of the present disclosure, and FIG. 5B with matched molecular weight linear.

FIG. 6A shows Dynamic light scattering volume plots for cyclic poly(phenylacetylene) according to an embodiment of the present disclosure, and FIG. 5B with matched molecular weight linear.

FIG. 7 shows a catalyst loop for the polymerization process carried out be **4.**

FIG. 8A shows ozonolysis of cyclic Poly(phenylacetylene) and FIG. 8B for linear poly(phenylacetylene), and samples for 30s and 16 min.

FIG. 9A shows overlaid GPC trace of cyclic and linear PS. With cyclic PS Mw = 31,000, PDI = 1.28; Blue: linear standard PS Mw = 30,000, PDI = 1.06; and FIG. 9B shows overlaid GPC trace of cyclic and linear PS. Black: cyclic PS Mw = 31000, PDI = 1.28; Red: linear standard PS Mw = 20,000, PDI = 1.02.

DETAILED DISCLOSURE

U.S. International Patent Application No. PCT/US2012/065841, filed November 19, 2012 teaches the preparation of trianionic pincer ligand supported metal-alkylidyne complex. It is disclosed therein that upon addition of an alkyne to a trianionic pincer ligand supported metal-alkylidyne complex, conversion occurs into a tetra-anionic pincer-ligand supported metal-alkyne or, as shown below, a tetraanionic pincer ligand supported metallacycloalkylene complex of the structure:

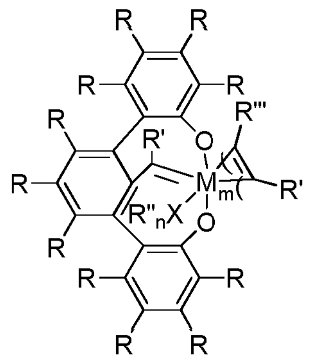

where: R is, independently, H, methyl, ethyl, *n*-propyl, *i*-propyl, *n*-butyl, *i*-butyl *t*-butyl, or larger alkyl, or any other substituent that does not inhibit formation of the tetra-anionic pincer-ligand supported metallacycloalkylene; R' is, independently, methyl, ethyl, *n*-propyl, *i*-propyl, *n*-butyl, *i*-butyl, *t*-butyl, $C_5$-$C_{22}$ alkyl, phenyl, naphthyl, $C_{13}$-$C_{22}$ aryl, substituted aryl, or trimethylsilyl; R''' is H or methyl; X, independently, is O, N, S, P, or Se; R", independently, can be methyl, ethyl, *n*-propyl, *i*-propyl, *n*-butyl, *i*-butyl, *t*-butyl, $C_5$-$C_{22}$, phenyl, naphthyl, $C_{13}$-$C_{22}$ aryl, or two R" are $C_4$-$C_6$ alkylene combined with a single X as a heterocycle; n is 1 to 3 depending on X; m is n is 1 to 2; and M is a group 5-7 transition metal. When R' is substituted aryl, one or more substituents can be fluoro, $C_1$-$C_3$ alkoxy, or trifluoromethyl.

The tetra-anionic pincer-ligand supported metallacycloalkylene complex is a metallacyclopropylene complex formed by the addition of an alkyne to the trianionic pincer ligand supported metal-alkylidyne complex. As shown in FIG. 1, the preparation of the tetra-anionic pincer-ligand supported metallacycloalkylene complex at low temperature with two equivalents of an acetylene monomer gives a mixture of products toward polymerization. In an embodiment of the present disclosure, multiple equivalents of the acetylene monomer is included with the trianionic pincer ligand supported metal-alkylidyne complex at room temperature results in a single tetra-anionic pincer-ligand supported metallacycloalkylene complex with two like monomers on the resulting tetra-anionic pincer-ligand supported metallacycloalkylene complex, as indicated in Equation 1, below.

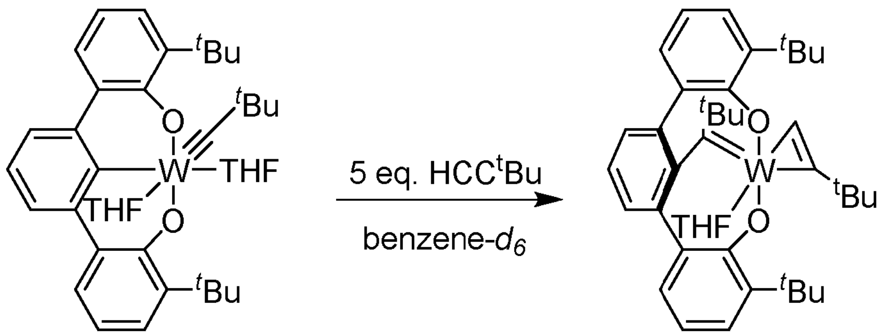


Equation 1 **1** **4**

An embodiment of the present disclosure is directed to a method for the polymerization of alkynes using a trianionic pincer ligand supported metal-alkylidyne complex or a tetraanionic pincer ligand supported metallacyclopropene complex as the polymerization catalyst. The poly(alkyne)s prepared by this method can display one or more geometries across the resulting double bonds of the poly(alkyne) backbone. The all *cis* alkylene chain, indicated by Equation 2, is for illustrative purposes only, and is not intended to suggest the geometry to be expected upon polymerization of all possible monomers, using all possible trianionic pincer ligand supported metal-alkylidyne complexes, or under any set of reaction conditions. The polymerization reaction occurs upon combining the trianionic pincer ligand supported metal-alkylidyne complex to an alkyne monomer, in a fluid state, which can be in solution. The alkyne can be unsubstituted, monosubstituted, or disubstituted. The trianionic pincer ligand supported metal-alkylidyne complex can be a neutral complex or an anion of a salt when employed with a strong electrophile, such as methyl triflate. The polymerization can be carried out at relatively mild conditions, for example, ambient temperatures at dry conditions under an inert atmosphere. The polymerization can occur with a large turnover of monomer per catalyst, a high degree of polymerization, and a high yield of polymer. As would be expected by those skilled in the art, the rate of polymerization and the practical conversion varies with the nature of the monomer, catalyst and conditions for the polymerization. In an embodiment of the present disclosure, the resulting poly(alkyne) can be a cyclic polymer.

Equation 2 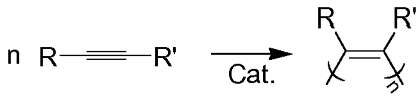


Complex **4** maintains a high activity that is similar to that observed for catalyst **2.** Loading either catalyst **2, 3,** or the catalyst **4** in a 10,000:1 phenylacetylene to catalyst ratio in 2 mL of toluene results in polymerization and a product we now understand to be cyclic poly(phenylacetylene). In the first two minutes of polymerization, **2** averages 6.89 × $10^6$ $g_{pol}$/mol/h, **3** averages 4.39 × $10^6$ $g_{pol}$/mol/h, but incredibly **4** averages 9.00 × $10^6$ $g_{pol}$/mol/h. Not only does **4** have excellent activity, it achieves complete conversion under these conditions with a TON ≈ 10,000 after 22 min. The polymerization carried out in the presence of styrene or excess TEMPO (a radical trap) does not alter or inhibit the polymerization of phenylacetylene. The first indication that the catalysts produce cyclic poly(phenylacetylene) came from the observation that 1-phenyl-1-propyne inserts into the W-alkene bond of **2** to produce a five membered metallacyclopentadiene complex. FIG. 7 shows a scheme for a ring-expansion polymerization of alkynes.

Cyclic polymers have a smaller hydrodynamic volume and thus longer elution time by GPC compared to linear analogs. Also, static and dynamic light scattering techniques can confirm that cyclic polymers have smaller particle radii versus linear equivalents. Calculations indicate the root mean square (rms) radius of gyration ($<Rg^2>^{0.5}$) of a cyclic polymer is half that of the same polymer in a linear topology. In some cases, it is possible to open the resulting macrocycle through bond cleavage, resulting in a linear topology and a subsequent change in physical properties. Linear poly(phenylacetylene) synthesized using (acetylacetonato)(1,5-cyclooctadiene)rhodium(I) as a catalyst offers a comparison to the cyclic polymers produced by **4,** and by matching molecular weights and polydispersities, the effect of topology can be determined unambiguously. Using DLS and SLS techniques, the hydrodynamic radius ($R_H$) and rms radius of gyration ($<R_g^2>^{0.5}$) were determined for the linear and cyclic polymers. It is well understood that the ratio of

$$\frac{R_{H\,cyclic}}{R_{H\,linear}} = 0.9$$

and

$$\frac{<R_g^2>_{cyclic}}{<R_g^2>_{linear}} = 0.5 \,.$$

Table 4, below, lists the experimental values of $R_H$ and $R_g$ for the cyclic and linear polymers. With little doubt the experimentally determined ratios clearly indicate the polymers produced with catalyst **4** are cyclic. The experimental ratios of

$$\frac{R_{H\,cyclic}}{R_{H\,linear}} = 0.85(2)$$

and

$$\frac{<R_g^2>_{cyclic}}{<R_g^2>_{linear}} = 0.35(4)$$

clearly indicate a difference in topology. The theoretical values are modeled after polyolefins containing $sp^3$ linkages, thus deviations from theory are expected for poly(phenylacetylenes) due to the more rigid $sp^2$ hybridized backbone.

METHODS AND MATERIALS

**General Considerations**

Unless specified otherwise, all manipulations were performed under an inert atmosphere using glove-box

techniques. Toluene and pentane were dried using a GlassCountour drying column. Phenylacetylene was purchased from Sigma-Aldrich, and doubly distilled from calcium hydride, degassed by freeze pump thawing, and filtered through a column of basic alumina immediately prior to use. Toluene-$d_8$ was dried over phosphorous pentoxide ($P_2O_5$), distilled, degassed by freeze pump thawing, and stored over 4Å molecular sieves. [$^t$BuOCO]W=C($^t$Bu)$(THF)_2$ (1) was prepared according to literature procedure. NMR spectra were obtained on Varian INOVA 500 MHz and Varian INOVA2 500 MHz spectrometers. Chemical shifts are reported in δ (ppm). For $^1$H and $^{13}$C NMR spectra, the residual solvent peaks were used as an internal reference. Molecular weight and polydispersity were determined by size exclusion chromatography (SEC) in dimethylacetamide (DMAc) with 50 mM LiCl at 50 °C and a flow rate of 1.0 mL/min (Agilent isocratic pump, degasser, and auto-sampler, columns: PLgel 5 μm guard + two ViscoGel I-series G3078 mixed bed columns: molecular weight range 0-20 × $10^3$ and 0-100 × $10^4$ g $mol^{-1}$). Detection consisted of a Wyatt Optilab T-rEX refractive index detector operating at 658 nm and a Wyatt miniDAWN Treos light scattering detector operating at 659 nm. Absolute molecular weights and polydispersities were calculated using Wyatt ASTRA software.

**Synthesis of [$^t$BuOCHO]W≡C$(CH_3)_3$(O$^t$Bu)(THF)**

In a nitrogen filled glove box, a glass vial was charged with [$^t$BuOCO]$H_3$ (140 mg, 0.37 mmol) in THF (1 mL); and subsequently cooled to -35 °C. In a second vial, ($^t$BuO)$_3$W≡CC$(CH_3)_3$ (200 mg, 0.42 mmol) was dissolved in THF (1 mL) and the solution was added dropwise to the first solution while stirring. As the solution warmed to room temperature, a gradual color change from brown to dark yellow was observed. Stirring was continued for 30 min at room temperature. A tacky dark yellow material was obtained after removal of volatiles. Cold pentane (4 mL) was added to form a brown suspension, from which a bright yellow precipitate was filtered. The filtrate was washed with additional cold pentane. Single crystals were obtained by cooling a dilute pentane solution at -35 °C for 12 h; yield (206 mg, 72%). $^1$H NMR (300 MHz, $C_6D_6$, δ (ppm)): 8.94 (s, tol-$d_8$, -65 °C, $C_{ipso}$-*H*), 7.46 (d, *J* = 7.8 Hz, 4H, Ar-*H*), 7.33-7.27 (m, 4H, Ar-*H*), 6.96 (t, *J* = 8.0 Hz, 2H, Ar-*H*), 3.43(m, 4H, $OCH_2CH_2$/THF), 1.67 (s, 18H, -C$(CH_3)_3$), 1.49 (bs, 9H, -OC$(CH_3)_3$), 1.29 (m, 4H, $OCH_2CH_2$/THF), 0.86 (s, 9H, W≡CC$(CH_3)_3$). $^{13}$C{1H}NMR (75.36 MHz, $C_6D_6$, δ (ppm)): 297.1 (s, W≡CC$(CH_3)_3$), 165.2(s, C, aromatic), 144.8(s, C, aromatic), 138.0(s, C, aromatic), 130.5(s, C, aromatic), 127.5(s, C, aromatic), 126.9(s, C, aromatic), 121.7(s, C, aromatic), 80.7 (s, -OC$(CH_3)_3$), 50.3 (s, W≡CC$(CH_3)_3$), 35.7 (s, -C$(CH_3)_3$), 32.9 (s, W≡CC$(CH_3)_3$), 32.2 (s, -OC$(CH_3)_3$), 31.3 (s, -C$(CH_3)_3$). Anal. Calcd for $C_{35}H_{46}O_3W$: C, 60.18; H, 6.64. Found: C, 59.76, H, 6.74.

**Synthesis of {[$^t$BuOCO]W≡CC$(CH_3)_3$(O$^t$Bu)}{$Ph_3PCH_3$}**

A glass vial was charged with [$^t$BuOCHO]W≡C$(CH_3)_3$(O$^t$Bu)(THF) (206 mg, 0.267 mmol) and $Et_2O$ (1 mL), and subsequently cooled to -35 °C. A solution of $Ph_3P=CH_2$ (74 mg, 0.267 mmol) in $Et_2O$ (0.5 mL) was prepared and added to the cold solution. The resulting mixture was warmed to 25 °C where the solution changed in color from a "dark" yellow to "canary" yellow. The solution was stirred for 45 min at room temperature, during which time, the salt product precipitated as a yellow solid. The product was filtered, and the filtrate was washed with pentanes (3 × 1 mL) to yield (216 mg, 83%). $^1$H NMR (500 MHz, $C_6D_6$, δ (ppm)): 7.77 (d, *J* = 7.2 Hz, 2H, Ar-*H*), 7.52 (t, *J* = 7.2 Hz, 4H, Ar-*H*), 7.04 (d, *J* = 7.3 Hz, 2H, Ar-*H*), 6.96(t, *J*= 7.9 Hz, 3H, Ar-*H*), 6.84 (dt, *J* = 2.5 Hz, *J* = 7.7 Hz, 6H, Ar-*H*), 6.78 (t, *J* = 7.3 Hz, 1H, Ar-*H*), 6.58(d, *J* = 7.9 Hz, 3H, Ar-*H*), 6.55(d, *J* = 7.7 Hz, 3H, Ar-*H*), 2.03 (s, 9H, -OC$(CH_3)_3$), 1.97 (s, 18H, -C$(CH_3)_3$), 1.83 (d, $J_{PH}$ = 12.8 Hz, 3H, P-$CH_3$), 0.91 (s, 9H, W≡CC$(CH_3)_3$). $^{13}$C{$^1$H} NMR (126 MHz, $C_6D_6$, δ (ppm)): 305.3 (s, W≡CC$(CH_3)_3$), 205.3 (s, W-$C_{pincer}$), 164.8(s, *C*, aromatic), 143.1(s, *C*, aromatic), 137.2, 135.2 (d, $J_{CP}$ = 2.7 Hz, *C*, aromatic), 133.1 (d, $J_{CP}$ = 10.1 Hz, C, aromatic), 130.7 (d, $J_{CP}$ = 12.8 Hz, *C*, aromatic), 127.9 (s, *C*, aromatic), 124.7 (s, *C*, aromatic), 124.4 (s, *C*, aromatic), 124.0 (s, *C*, aromatic), 119.6 (s, *C*, aromatic), 118.5 (d, $J_{CP}$ = 7.3 Hz, *C*, aromatic), 76.2 (s, - OC$(CH_3)_3$), 50.2 (s, W≡CC$(CH_3)_3$), 36.5(s, -C$(CH_3)_3$), 34.9 (-OC$(CH_3)_3$), 34.0 (s, W≡CC$(CH_3)_3$), 31.8 (s, -C$(CH_3)_3$), 9.1 (d, $J_{CP}$ = 56.7 Hz). $^{31}$P{$^1$H} NMR (121M Hz, $C_6D_6$, δ (ppm)): 21.6. Anal. Calcd for $C_{54}H_{63}O_3PW$: C, 66.53; H, 6.51. Found: C, 66.57, H, 6.51.

Attempts to obtain single crystals of the complex were unsuccessful. The combination of $^1$H, $^{13}$C, $^{31}$P, and correlation experiments using NMR spectroscopy and combustion analysis allowed for unambiguous identification.

**Synthesis of [$^t$BuOCO]W≡CC$(CH_3)_3(THF)_2$ (1)**

A glass vial was charged with {[$^t$BuOCO]W≡CC$(CH_3)_3$(O$^t$Bu)}{$Ph_3PCH_3$} (115 mg, 0.164 mmol) and $Et_2O$ (5 mL) to provide an orange suspension. THF (0.1 mL) was added to precipitate phosphoniumtriflate as a white solid. The solution was filtered and concentrated under reduced pressure. Cooling the solution to -35 °C for 12 h yielded compound 1 as a "dark" red crystalline material; yield (100 mg, 78%). $^1$H NMR (500 MHz, $C_6D_6$, δ (ppm)): 8.00 (d, *J*= 7.4 Hz, 2H, Ar-*H*), 7.84 (d, *J* = 8.5 Hz, 2H, Ar-*H*), 7.46 (d, *J* = 7.9 Hz, 2H, Ar-*H*), 7.35(t, *J* = 8.5 Hz, 1H, Ar-*H*), 7.05(t, *J* = 7.5 Hz, 2H, Ar-*H*), 4.07 (br, 4H, $OCH_2CH_2$/THF), 3.40 (br, 4H, $CH_2CH_2$/THF), 1.65 (s, 18H, -C$(CH_3)_3$), 1.45(br, 4H, $OCH_2CH_2$/THF), 1.16(br, 4H, $OCH_2CH_2$/THF), 0.61 (s, 9H, W≡CC$(CH_3)_3$). $^{13}$C{$^1$H} NMR (126 MHz, $C_6D_6$, δ (ppm)): 320.7 (s,

W≡*C*C($CH_3$)$_3$), , 193.5 (s, W-$C_{ipso}$), 163.1 (s, *C*, aromatic), 139.2 (s, *C*, aromatic), 135.4 (s, *C*, aromatic), 134.5 (s, *C*, aromatic),128.0 (s, *C*, aromatic), 126.4 (s, *C*, aromatic), 125.3 (s, *C*, aromatic),124.3 (s, *C*, aromatic), 119.9 (s, *C*, aromatic), 76.8 (s, O$CH_2CH_2$/THF), 67.3 (s, O$CH_2CH_2$/THF), 48.6 (s, W≡C*C*($CH_3$)$_3$), 35.3 (s, -*C*($CH_3$)$_3$), 32.5 (s, W≡CC($CH_3$)$_3$), 30.6(s, -C($CH_3$)$_3$) , 25.6 (s, $OCH_2CH_2$/THF), 24.9 (s, $OCH_2CH_2$/THF). Anal. Calcd for $C_{39}H_{52}O_4$: C, 60.94; H, 6.82. Found: C, 60.88, H, 6.87.

A combination of $^1$H and $^{13}$C NMR spectroscopy with combustion analysis allowed the unambiguous identification of 1. X-Ray Intensity data were collected at 100 K on a Bruker DUO diffractometer using MoKα radiation (λ = 0.71073 Å) and an APEXII CCD area detector. Raw data frames were analyzed by the program SAINT and integrated using 3D profiling algorithms. Reducing the resulting data produced the hkl reflections and their corresponding intensities and estimated standard deviations. The data were corrected for Lorentz and polarization effects and numerical absorption corrections were applied based on indexed and measured faces.

**Synthesis of [$O_2C$($^t$BuC=)W($\eta^2$-HC≡CPh)] (2) and [$O_2C$(PhC=)W($\eta^2$-HC≡C$^t$Bu)] (3)**

Complex **1** reacts instantaneously with 2 equiv. of phenylacetylene in toluene-$d_8$ at - 35 °C to yield [$O_2C$($^t$BuC=)W($\eta^2$-HC≡CPh)] **(2)** and [$O_2C$(PhC=)W($\eta^2$-HC≡C$^t$Bu)] **(3)** in a 2:1 ratio, along with small amounts of polyphenylacetylene (PPA) (Scheme 1). Adding $Et_2O$ to the mixture of compounds selectively dissolves the two complexes, and filtering results in the separation of $Et_2O$-insoluble PPA. Adding pentane to the mixture of **2** and **3** selectively dissolves **2,** and filtering results in the segregation of **3,** a pentane-insoluble orange solid in 33% yield. The pentane soluble solution of **2** was reduced under vacuum to yield a yellow solid in 40% yield.

Single crystals amenable to an X-ray diffraction experiment deposit from a concentrated solution of **3** in $Et_2O$ at -35 °C. **3** and **2** feature the unusual combination of a tridentate tetra-anionic pincer-type ligand comprising two phenolate and an alkylidene connection.

Complexes **2** and **3** form in a 2 to 1 ratio from **1** and phenylacetylene at -35 °C. As illustrated in equation I, below, heating a solution of isolated **2** in toluene-$d_8$ at 85 °C for 2.5 weeks established **2** and **3** in equilibrium. At equilibrium, integration of the respective protons on the $\eta^2$-*H*C≡CPh and $\eta^2$-*H*C≡$^t$Bu moieties indicates that **2** and **3** exist in a 17:83 ratio ($K_{eq}$ = 5), corresponding to an energy difference of -1.14 kcal/mol at 85 °C.

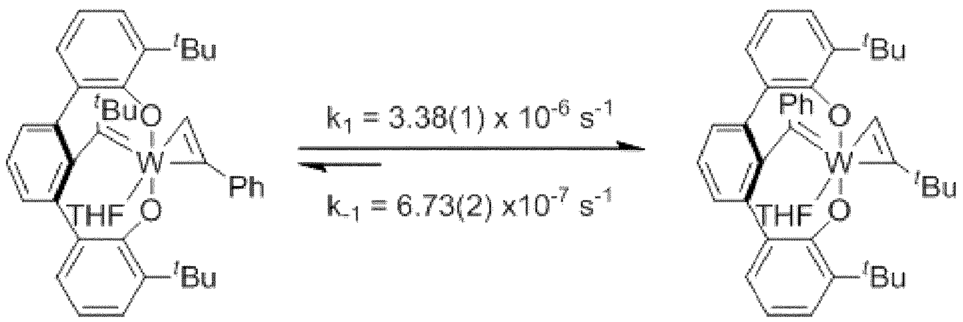


**2** **3**

Equation I

**Polymerization of Alkynes**

In a nitrogen filled glove-box a stock solution of [$^t$BuOCO]W≡CC($CH_3$)$_3$(THF)$_2$ **(1)** (0.2 μmol in 50 μL toluene) was added to anhydrousmonomer dissolved in toluene (1000 μmol). The mixture was allowed to stir at room temperature for 30 minutes. The reaction mixture was removed from the glove-box and precipitated in either methanol or diethyl ether (20 mL). The polymeric material was collected by filtration and dried under vacuum at 80 °C for 2 hours prior to weighing to obtain the yield

Complex **1** catalyzes phenylacetylene polymerization, complexes **2** and **3** also catalyze phenylacetylene polymerization, suggesting that **1** converts to **2** and **3** in the presence of phenylacetylene.

In a typical reaction, a toluene solution of the catalyst was added to the stirring solution of acetylene monomer and toluene. The reaction was vigorously stirred for 1 h and quenched with methanol. The resulting polymer was dried in vacuo and weighed to provide the quantitative percent yield and turnover number (TON). Polymer characterization includes FTIR and $^1$H NMR as well as gel permeation chromatography (GPC) for all samples soluble in THF to determine $M_w$ and $M_w/M_n$. Polymerization results using **1** are given in Table 1, below.

**Table 1** Acetylene polymerization results using **1**[a]

| Monomer | % Yield | TON | $M_w$[b] | $M_w/M_n$[b] |
|---|---|---|---|---|
| 1-ethynyl-4-methoxybenzene | 91 | 4540 | 39056 | 2.24 |
| Phenylacetylene | 99 | 4994 | 33692 | 3.17 |
| 1-ethynyl-4-fluorobenzene | 70 | 3497 | 34980 | 3.16 |
| 1-ethynyl-3,5-bis(trifluoro-methyl) benzene | 10 | 525 | 10980 | 1.46 |
| 1-decyne | 96 | 4810 | 165915 | 1.27 |
| 3,3-dimethyl-1-butyne[c] | 95 | 950 | 3235 | 1.56 |
| trimethylsilylacetylene[c][d] | 66 | 672 | - | - |

[a]**1** (0.2 μmol) in toluene was added to acetylene monomer (1000 μmol) in toluene for 1 h at 25 °C. [b] Determined by GPC. [c]**1** (1.0 μmol) in toluene was added to acetylene monomer (1000 μmol) in toluene and heated for 1 h at 75 °C. [d]$M_w$ and $M_w/M_n$ could not be determined due to polymer insolubility in THF.

A most remarkable feature of the catalysis is the exceptionally high activity and turnover number. Complexes **1, 2** and **3** were screened to find the highest attainable turnover number and catalytic activity. Complex **2** supplies the best catalytic values in all cases. With a substrate-to-catalyst loading of 25,000 to 1, complex **2** turns over approximately 17,233 phenylacetylene monomer units, as indicated in Table 2, below. Additionally, **2** polymerizes phenylacetylene and 1-decyne with catalytic activities up to $5.64 \times 10^6$ $g_{PPA}$ $mol^{-1}$ $h^{-1}$ and $7.98 \times 10^6$ $g_{PA}$ $mol^{-1}$ $h^{-1}$, respectively.

**Table 2** Optimized polymerization results using **2**

| Monomer | mon:cat | % Yield | t (min) | TON | $g_{PA}$/mol/h |
|---|---|---|---|---|---|
| Phenylacetylene | 25,000 : 1 | 69 | 60 | 17,233 | 1,760,000 |
| Phenylacetylene | 10,000 : 1 | 92 | 10 | 9,204 | 5,640,000 |
| 1-Decyne | 10,000 : 1 | 96 | 10 | 9,620 | 7,980,000 |

**Synthesis of Catalyst [$O_2C(^tBuC=)W(\eta^2\text{-}HC\equiv C^tBu)$] 4**

In a nitrogen filled glovebox, a glass vial equipped with a stir bar was charged with **1** (400 mg, 0.52 mmol) and dissolved in toluene (5.0 mL). 3,3-dimethyl-1-butyne (214 mg, 321 μL, 2.60 mmol) was added via micropipette with stirring. After 5 min, the solvent and residual 3,3-dimethyl-1-butyne were removed in vacuo to yield the light brown solid **4** in >99% yield (405 mg, 0.52 mmol), for the reaction indicated in Equation 2, above. The resulting solid was dissolved in minimal pentane and cooled to -35 °C to yield single crystals amenable to X-ray diffraction, where the molecular structure is shown in FIG. 2. $^1H$ NMR (500 MHz, $C_7D_8$, δ (ppm)): 11.61 (s, 1H, W-$CH_{32}$), 7.41 (d, 2H, Ar-$H_{8,10}$), 7.28 (dd, 2H, Ar-$H_{3,16}$), 7.26 (t, 1H, Ar-$H_9$), 7.19 (dd, 2H, Ar-$H_{5,14}$), 6.77 (t, 2H, Ar-$H_{4,15}$), 3.60 (t, 4H, THF-$H_{38,41}$), 1.66 (s, 9H, W-C-C($CH_3$)$_3$ ($H_{29-31}$)), 1.20 (s, 18H, ligand C($CH_3$)$_3$ ($H_{20-22,24-26}$)), 1.16 (t, 4H, THF-$H_{39,40}$), 0.90 (s, 9H, W=C($CH_3$)$_3$ ($H_{35-37}$)). $^{13}C$ NMR: 268.8 (s, W=CC($CH_3$)$_3$ ($C_{33}$)), 213.0 (s, WCC($CH_3$)$_3$ ($C_{27}$)), 184.0 (s, WCCC($CH_3$)$_3$ ($C_{32}$)), 168.5 (s, $C_{1,18}$), 153.7 (s, Ar-$C_{7,11}$), 137.4 (s, Ar-$C_{6,13}$), 137.3 (s, Ar-$C_{2,17}$), 132.5 (s, Ar-$C_{12}$), 130.9 (s, Ar-$C_9$), 129.2 (s, Ar-$C_{810}$), 128.2 (s, Ar-$C_{3,16}$), 125.7 (s, Ar-$C_{5,14}$), 118.7 (s, Ar-$C_{4,15}$), 71.3 (s, THF-$C_{38,41}$), 46.0 (s, W=CC($CH_3$)$_3$ ($C_{34}$)), 39.2 (s, WCCC($CH_3$)$_3$ ($C_{28}$)), 36.0 (s, W=CC($CH_3$)$_3$ ($C_{35-37}$)), 34.3 (s, ligand C($CH_3$)$_3$ ($C_{19,23}$)), 31.1 (s, WCCC($CH_3$)$_3$ ($C_{29-31}$)), 30.1 (s, ligand C($CH_3$)$_3$ ($C_{20-22,24-26}$)), 25.00 (s, THF $C_{39,40}$). Anal. Calcd.: C: 63.24% H: 6.99%, Found: C: 63.28%, H: 7.09%. FIG. 3 gives the structure of **4** with tabulation of the $^1H$ and $^{13}C$ chemical shifts.

**Polymerization Procedure using 4**

In an inert atmosphere glove box, toluene (2.0 mL) was added to a glass vial equipped with a stir bar. Phenylacetylene (218 μL, 2.00 mmol) was added via micropipete with stirring. A stock solution (1 mg/mL) of 4 (157 μL, 0.20 μmol) was added to the stirring solution in one shot to initiate polymerization. Polymerization was terminated via addition into tenfold excess of stirring methanol. Turnover number with time are given for catalysts 1, 2, and 3 are shown in FIG. 4A, and for 2, 3, and 4 in FIG. 4B. The resulting polymer samples were isolated via vacuum filtration and residual solvent removed in vacuo. Table 3 and Table 4 give kinetic data as yield per polymerization duration for three trials where the GPC and dynamic light scattering plots are shown in FIGs 5A and 6A, respectively, for cyclic polymer from **4** with FIGs. 5B and 6B display the linear equivalents, respectively. Rudimentary kinetic data and the tabulated hydrodynamic volume

dependent characterization data is provided in Tables 3 and 4, below.

**Table 3** Triplicate polymerization of phenylacetylene by **4.**

| Time (s) | Trial 1 Yield (mg) | Trial 2 Yield (mg) | Trial 3 Yield (mg) | Average |
|---|---|---|---|---|
| 30 | 50 | 34 | 67 | 50.3 |
| 150 | 77 | 73 | 75 | 75.0 |
| 300 | 98 | 93 | 90 | 93.7 |
| 600 | 111 | 133 | 104 | 116.0 |
| 900 | 134 | 146 | 168 | 149.3 |

**Table 4** $M_n$, $M_w/M_n$, $R_H$, and ($\langle Rg^2 \rangle^{0.5}$) values for linear and cyclic poly(phenylacetylene).

| Catalyst | $M_n$ (absolute) | $M_w/M_n$ | Radius ($R_H$) | Radius ($\langle Rg^2 \rangle^{0.5}$) |
|---|---|---|---|---|
| **4** (cyclic) | 68,000 Da | 1.77 | 8.4(1) nm | 11.7(1.8) nm |
| (COD)$Rh^I$(acac) (linear) | 70,000 Da | 1.83 | 9.8(2) nm | 19.8(1.0) nm |

**General Hydrogenation Procedure**

Hydrogenation was performed using a 150 mL Parr high-pressure stainless steel reaction vessel equipped with a 50 mL glass round bottom flask and a Teflon stirring bar. Unsaturated polymers were dissolved in anhydrous toluene and degassed for 1 h before adding Pd/C. The round bottom flask was placed into the reactor and then sealed. The Parr vessel was purged with 500 psi of $H_2$ three times. The pressure reactor was then charged to the desired psi, and the mixture was stirred. Pd/C added every two days in the process. The resultant polymer was filtered through Celite® and precipitated into cold methanol to obtain a solid, which was then filtered and transferred to a vial and dried under high vacuum ($3 \times 10^{-4}$ mmHg) overnight. Different hydrogenation conditions are shown in supplementary Table 5. Entry 1, 2, 3 are the conditions of partial hydrogenations and entry 4 is full hydrogenation conditions.

**Table 5** Catalytic hydrogenation via Pd/C

| Entry | Loading (wt%) | Temperature (°C) | Time (days) | psi | Color |
|---|---|---|---|---|---|
| 1 | 10 | 75 | 2 | 750 | yellow |
| 2 | 10,10 | 75 | 4 | 900 | Light yellow |
| 3 | 15,15 | 90 | 5 | 900 | Trace color |
| 4 | 15,15,15 | 90 | 6 | 900 | white |

The cyclic and linear poly(phenylacetylene) samples were partially hydrogenated (saturated) using palladium on carbon. The partial hydrogenation enables the ring to be cleaved via ozonolysis. Subjecting a partially hydrogenated sample of linear poly(phenylacetylene) to ozonolysis will only result in C=C bond cleavage to provide fragments with smaller hydrodynamic volumes, and consequently lower molecular weights. It is impossible to create polymers with larger hydrodynamic volumes upon cleavage of a linear polymer. However, cleavage of a cyclic polymer will result in a linear fragment that will have a larger hydrodynamic volume, thus a shorter elution time on a GPC column. FIG. 8 shows GPC traces of polymer fragments from ozonolysis of cyclic poly(phenylacetylene) FIG. 8A and linear FIG. 8B. As evident from the shoulder at 14 min, ozonolysis leads to a fraction of polymers exhibiting shorter elution times, a result only possible if the polymer was cyclic. Since the hydrogenation is not selective, there is a growth in higher elution time fragments as well, as rings with multiple double bonds are opened and then cleaved into smaller and smaller fragments. By comparison, in b, ozonolysis of linear poly(phenylacetylene) produces only smaller fragments with longer elution times. Dynamic light scattering provides an alternative experimental verification of the cyclic topology. The average hydrodynamic radius of the hydrogenated cyclic polymer before ozonolysis is 10.14 nm; however, after ozonolysis the average hydrodynamic radius increases to 12.49 nm, a result only possible for a cyclic polymer.

The hydrogenated polymers display the cyclic nature of the polymers produced from catalyst 4. By fully hydrogenating cyclic poly(phenylacetylene) cyclic polystyrene is obtained. The cyclic polystyrene are compared with authentic and well characterized linear polystyrene standards. FIG. 9A shows GPC traces of cyclic polystyrene (Mn = 31,000; PDI = 1.28) with closely matched linear polystyrene (Mn = 30,000; PDI = 1.06). The two samples exhibit significantly different

retention times despite having nearly identical absolute molecular weights. Moreover, in an attempt to match elution times, FIG. 9B displays overlapping GPC traces of cyclic polystyrene (Mn = 31,000; PDI = 1.28) with dramatically smaller linear polystyrene (Mn= 20,000; PDI = 1.02).

## Claims

1. A catalyst having the structure of:

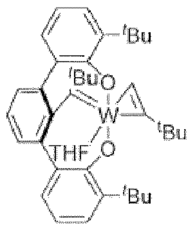

2. A polymerization mixture comprising the catalyst of claim 1 and an alkyne monomer.

3. The polymerization mixture of claim 2, wherein the alkyne monomer is a mono-substituted alkyne.

4. The polymerization mixture of any of claims 2 to 3, wherein the alkyne monomer is phenylacetylene.

## Patentansprüche

1. Katalysator mit der Struktur:

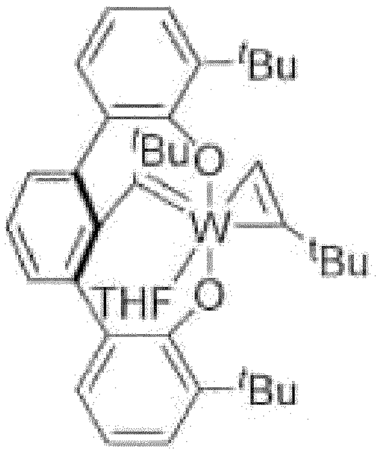

2. Polymerisationsgemisch, umfassend den Katalysator nach Anspruch 1 und ein Alkinmonomer.

3. Polymerisationsgemisch nach Anspruch 2, wobei das Alkinmonomer ein monosubstituiertes Alkin ist.

4. Polymerisationsgemisch nach einem der Ansprüche 2 bis 3, wobei das Alkinmonomer Phenylacetylen ist.

## Revendications

1. Catalyseur présentant la structure de :

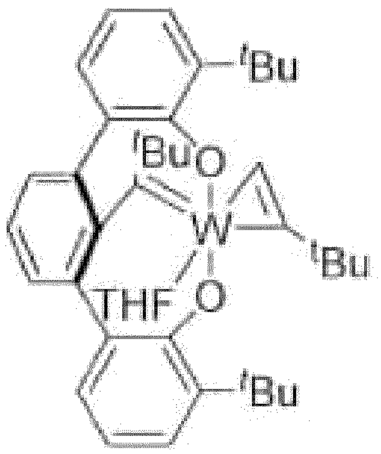

**2.** Mélange de polymérisation comprenant le catalyseur selon la revendication 1 et un monomère alcyne.

**3.** Mélange de polymérisation selon la revendication 2, dans lequel le monomère alcyne est un alcyne monosubstitué.

**4.** Mélange de polymérisation selon l'une quelconque des revendications 2 à 3, dans lequel le monomère alcyne est du phénylacétylène.

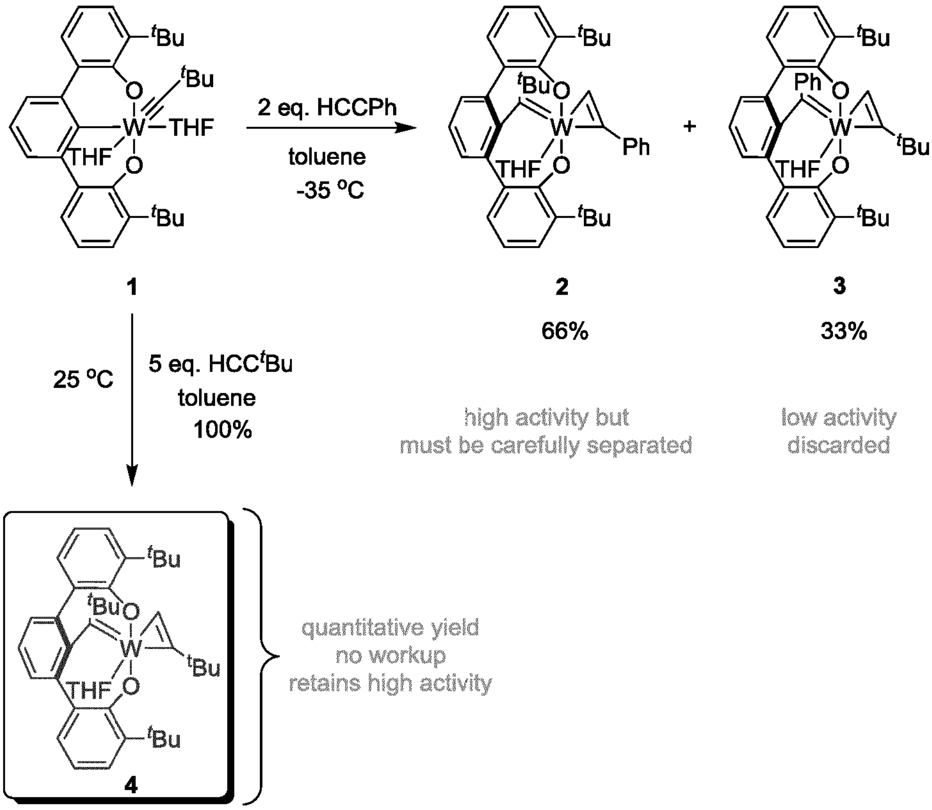
2 eq. HCCPh
toluene
-35 °C
+
1
2
3
66%
33%
high activity but
must be carefully separated
low activity
discarded
25 °C
5 eq. HCC$^t$Bu
toluene
100%
4
quantitative yield
no workup
retains high activity

*FIG. 1*

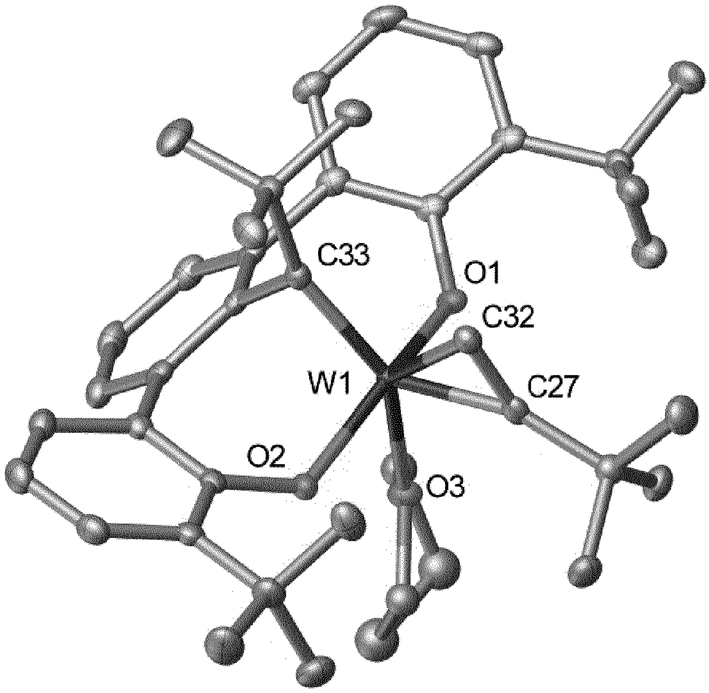


*FIG. 2*

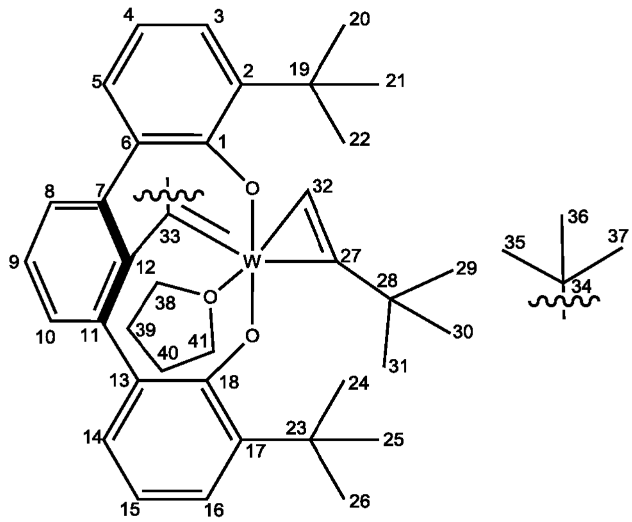

**$^1$H and $^{13}$C NMR chemical shifts**

| Position | $\delta^1$H (ppm) | $\delta^{13}$C (ppm) |
|---|---|---|
| **1, 18** | - | 168.5 |
| **2, 17** | - | 137.3 |
| **3, 16** | 7.28 | 128.2 |
| **4, 15** | 6.77 | 118.7 |
| **5, 14** | 7.19 | 125.7 |
| **6, 13** | - | 137.4 |
| **7, 11** | - | 153.7 |
| **8, 10** | 7.41 | 129.2 |
| **9** | 7.26 | 130.9 |
| **12** | - | 132.5 |
| **19, 23** | - | 34.3 |
| **20-22, 24-26** | 1.20 | 30.1 |
| **27** | - | 213.0 |
| **28** | - | 39.2 |
| **29-31** | 1.66 | 31.1 |
| **32** | 11.61 | 184.0 |
| **33** | - | 268.8 |
| **34** | - | 46.0 |
| **35-37** | 0.90 | 36.0 |
| **38, 41** | 3.60 | 71.3 |
| **39, 40** | 1.16 | 25.0 |

*FIG. 3*

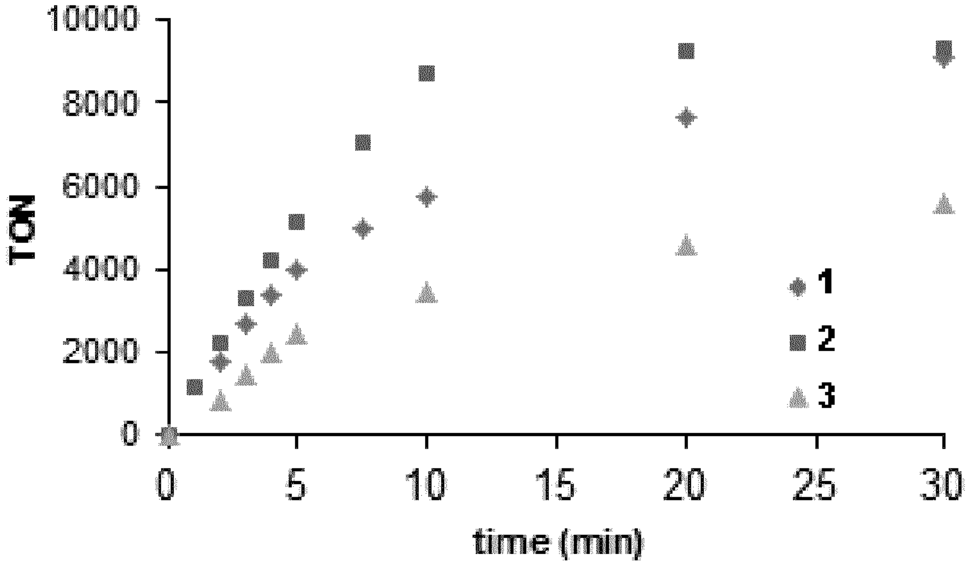
10000
8000
6000
4000
2000
0
TON
0
5
10
15
20
25
30
time (min)
1
2
3

*FIG. 4A*

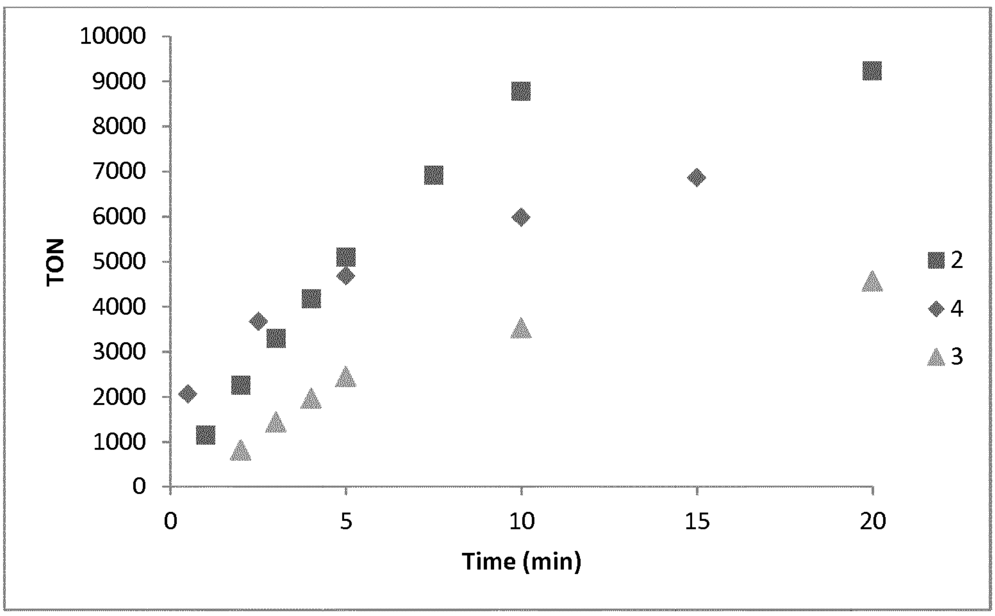
10000
9000
8000
7000
6000
5000
4000
3000
2000
1000
0
TON
0
5
10
15
20
Time (min)
2
4
3

*FIG. 4B*

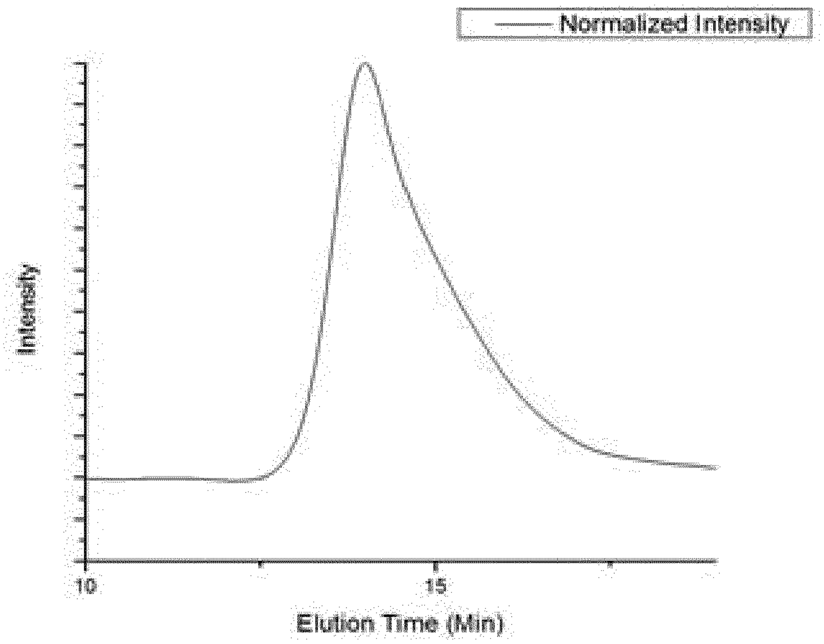
Normalized Intensity
Intensity
10
15
Elution Time (Min)

*FIG. 5A*

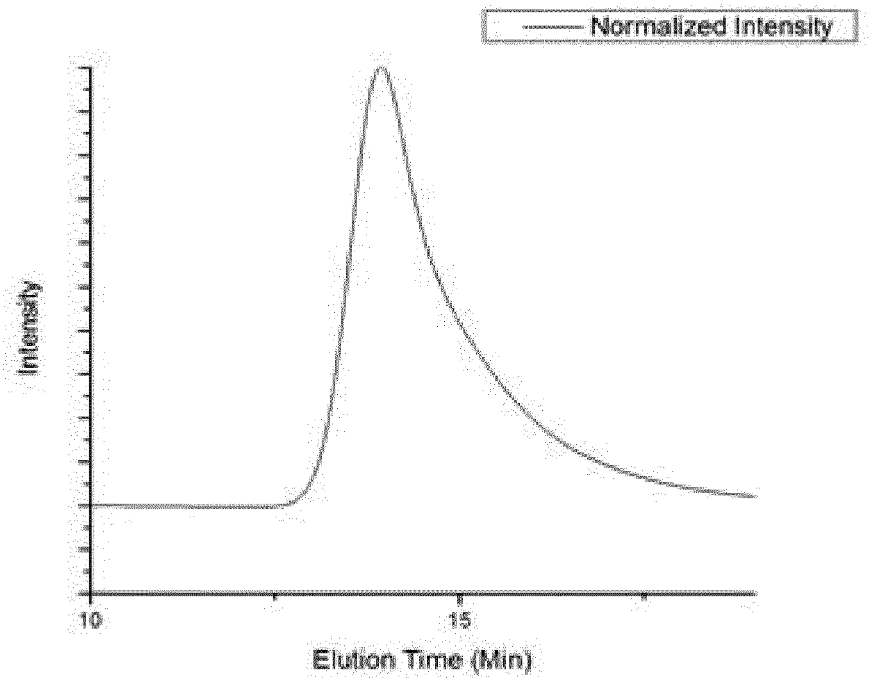
Normalized Intensity
Intensity
10
15
Elution Time (Min)

*FIG. 5B*

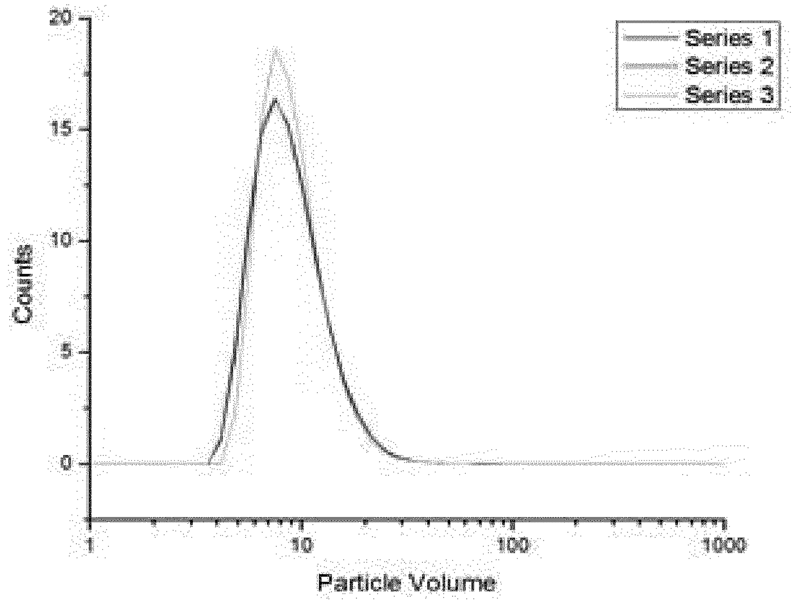
Series 1
Series 2
Series 3
Counts
Particle Volume

FIG. 6A

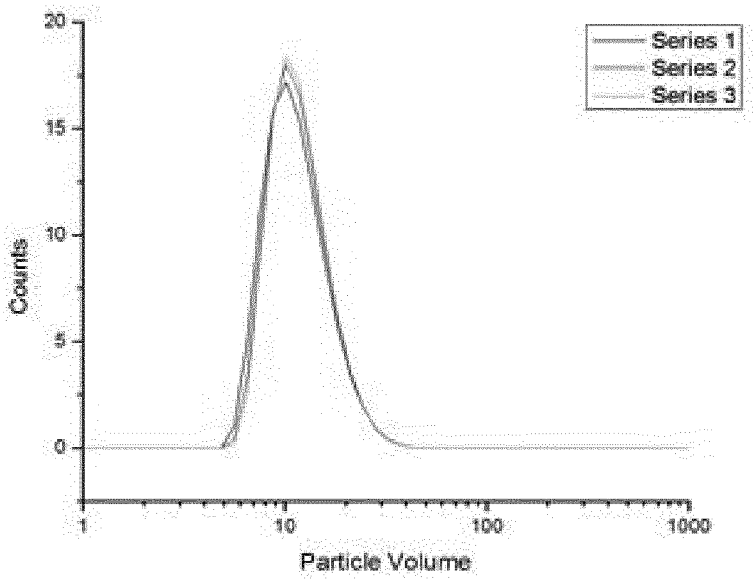
Series 1
Series 2
Series 3
Counts
Particle Volume

FIG. 6B

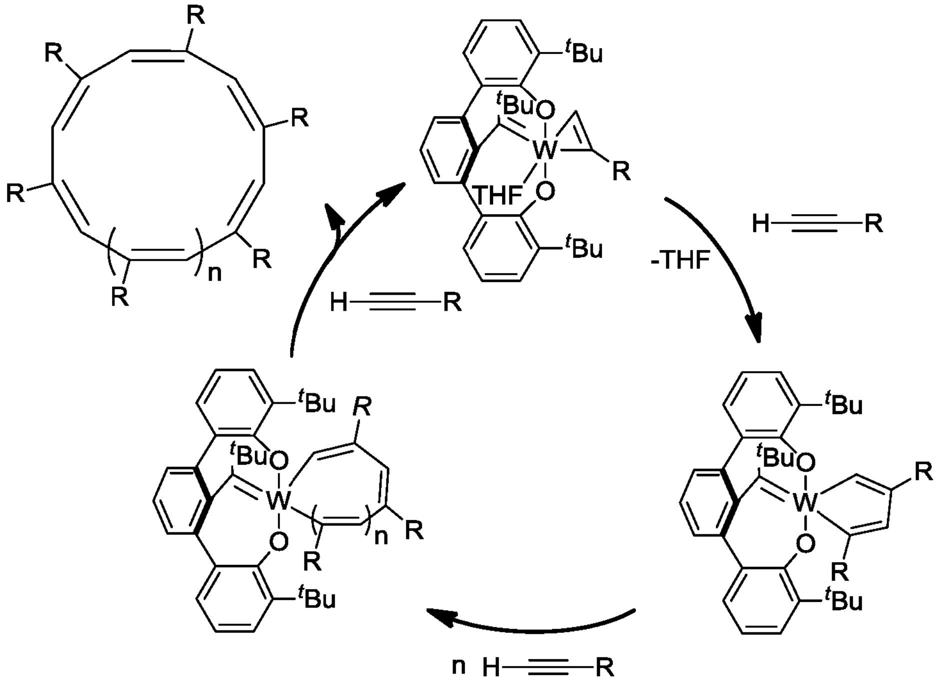


*FIG. 7*

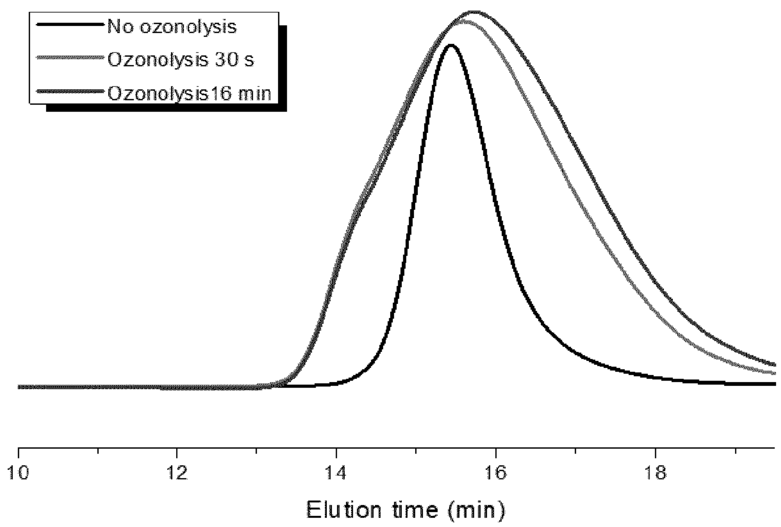
No ozonolysis
Ozonolysis 30 s
Ozonolysis16 min
10
12
14
16
18
Elution time (min)

*FIG. 8A*

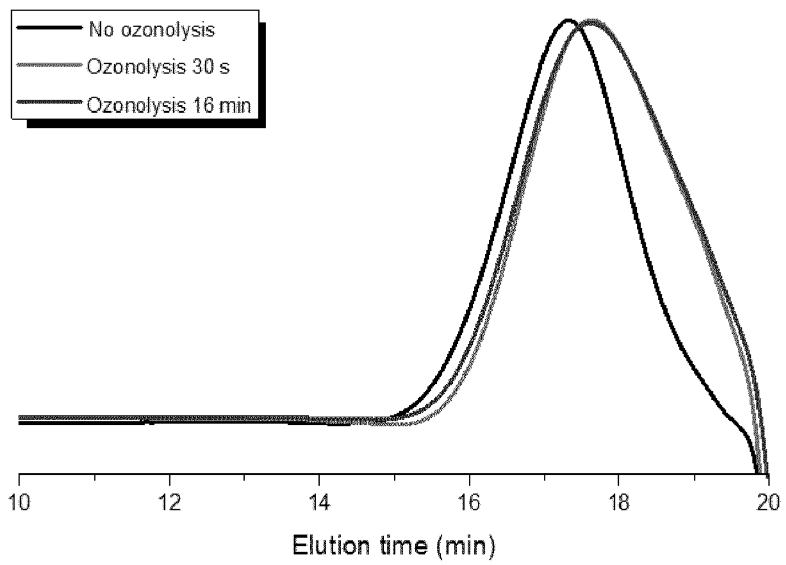
No ozonolysis
Ozonolysis 30 s
Ozonolysis 16 min
10
12
14
16
18
20
Elution time (min)

*FIG. 8B*

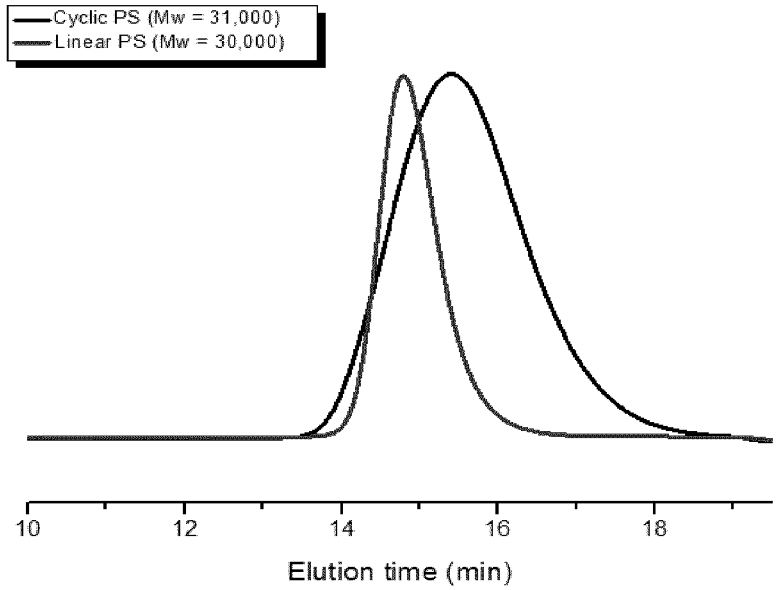
Cyclic PS (Mw = 31,000)
Linear PS (Mw = 30,000)
10
12
14
16
18
Elution time (min)

*FIG. 9A*

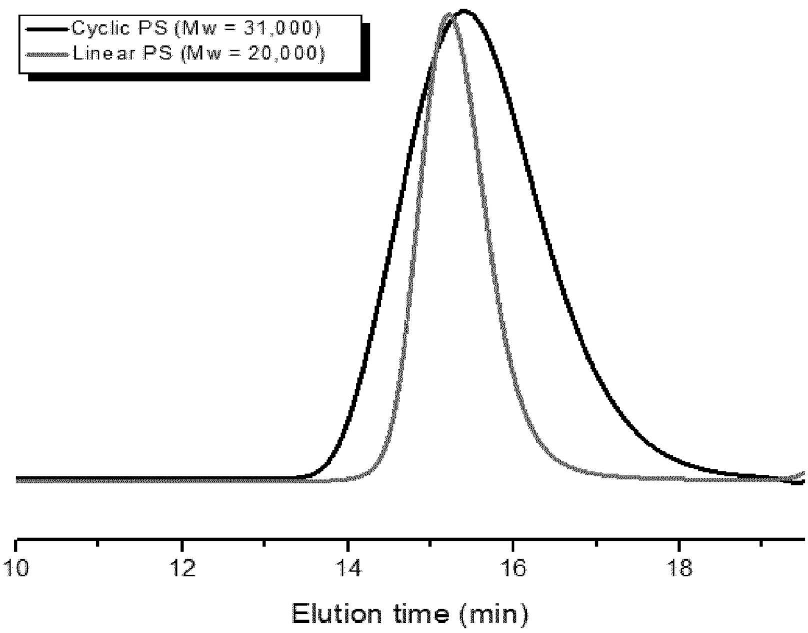
Cyclic PS (Mw = 31,000)
Linear PS (Mw = 20,000)
10
12
14
16
18
Elution time (min)

*FIG. 9B*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2012065841 W


### Non-patent literature cited in the description


- **GEYER et al.** *J. Am. Chem. Soc.,* 2007, vol. 129, 3800-1
- **BAILEY et al.** *J. Am. Chem. Soc.,* 2007, vol. 129, 2234-5
- **MORTREUX et al.** *J. Mol. Catal. A: Chem.,* 1995, vol. 96, 95-105
- **KATZ et al.** *J. Am. Chem. Soc.,* 1984, vol. 106, 2659-68
- **KRICHELDORF.** *Macromolecules,* 1995, vol. 28, 6718-6725
- **BIELAWSKI et al.** *Science,* 2002, vol. 297, 2041-2044
- **XIA, Y. et al.** *J. Am. Chem. Soc.,* 2009, vol. 131, 2670-2677